## Europäisches Patentamt
## European Patent Office
## Office européen des brevets

(19)

(11) Veröffentlichungsnummer: **0 033 862**
**B1**

(12) # EUROPÄISCHE PATENTSCHRIFT

(45) Veröffentlichungstag der Patentschrift:
**10.08.83**

(21) Anmeldenummer: **81100362.3**

(22) Anmeldetag: **19.01.81**

(51) Int. Cl.³: **B 29 F 5/02**, B 29 C 3/00, B 30 B 11/02

(54) **Verfahren zur Herstellung eines Formkörpers aus pulver- bis granulatförmigem thermoplastischem Kunststoff.**

(30) Priorität: **28.01.80 DE 3002910**

(43) Veröffentlichungstag der Anmeldung:
**19.08.81 Patentblatt 81/33**

(45) Bekanntmachung des Hinweises auf die Patenterteilung:
**10.08.83 Patentblatt 83/32**

(84) Benannte Vertragsstaaten:
**AT BE CH DE FR GB IT LI NL SE**

(56) Entgegenhaltungen:
**DE-A-1 805 090**
**DE-A-2 025 709**
**DE-B-2 611 420**
**GB-A-1 528 560**
**US-A-3 717 427**

(73) Patentinhaber: **BASF Aktiengesellschaft,
Carl-Bosch-Strasse 38, D-6700 Ludwigshafen (DE)**

(72) Erfinder: **Hagen, Karl, Dr., Duerkheimer Strasse 2,
D-6701 Friedelsheim (DE)**
Erfinder: **Scholl, Karl Heinz, Dr., Muehltorstrasse 4,
D-6715 Lambsheim (DE)**

# Verfahren zur Herstellung eines Formkörpers aus pulver- bis granulatförmigem thermoplastischem Kunststoff

Die Erfindung bezieht sich auf ein Verfahren zur Herstellung eines Formkörpers aus pulver- bis granulatförmigem thermoplastischem Kunststoff gemäss dem ersten Teil des Anspruchs. Ein derartiges Verfahren ist durch die DE-A-1805090 bekannt. Bei diesem bekannten Verfahren wird die Schwingungsbeaufschlagung bis zur Fertigstellung eines Hohlkörpers aufrechterhalten, d.h. das Kunststoffmaterial wird völlig plastifiziert. Hierbei erfolgt zwar auch schon eine gewisse biaxiale Orientierung, jedoch bei niedrigem Orientierungsniveau, weil die Temperatur des plastifizierten Materials eine Ausbildung von Orientierungsspannungen nicht zulässt.

Es war Aufgabe der Erfindung ein besonders energiesparendes Verfahren zur Herstellung von Formkörpern aus thermoplastischen Kunststoffen zu schaffen, das die Möglichkeit eröffnet, das hohe mechanische Potential der Kunststoffe im Sinne einer Verbesserung der physikalischen Eigenschaften der Formkörper zu nutzen.

Diese Aufgabe wird durch die im zweiten Teil des Anspruchs angegebenen Merkmale gelöst.

Für das erfindungsgemässe Verfahren sind alle thermoplastisch verarbeitbaren Kunststoffe geeignet, beispielsweise Olefinpolymerisate, wie Polyäthylen oder Polypropylen; Styrolpolymerisate, wie Polystyrol oder Copolymere des Styrols; Chlor enthaltende Polymerisate, wie Polyvinylchlorid oder chlorierte Polyolefine; Polyamide, Polymethylmethacrylat, Polyacetal, Polycarbonat sowie Mischungen dieser Polymerisate.

Diese Kunststoffe können die üblichen Zusatzstoffe, wie Füllstoffe, Pigmente, Farbstoffe, Antistatika, Stabilisatoren, Flammschutzmittel oder Gleitmittel enthalten.

Die Kunststoffe werden in Pulver- bis Granulatform in einer mehrteilig ausgebildeten, geschlossenen Form einem mit etwa 15 bis 21 kHz, zweckmässig 19 bis 20 kHz oszillierenden Druck von etwa 10 bis 200 bar ausgesetzt. Die Pressung ist in der Weise abgestuft, dass sich unterhalb des Kristallitschmelzpunktes eine Korngrenzenhaftung ergibt, die ausreicht, um die einzelnen Kunststoffpartikel zu einem Festkörper zu verbinden. Durch Erhöhung der Oszillatorfrequenz oder wahlweise durch Variation der Pressung kann ein so entstandenes Kunststoffteil bis zum Erweichungspunkt erwärmt und in festem Zustand in einem nachfolgenden Verfahrensschritt, z.B. durch Thermoformen, zu einem Formkörper umgeformt werden. Das so enstandene Kunststoffteil bzw. ein daraus gebildeter Verformling wird unmittelbar anschliessend ohne zusätzlichen Wärmebedarf weiterverformt. Bei einem solchen Vorgehen ist somit nur die Energie aufzuwenden, die für die eigentliche Formgebung benötigt wird. Energie für das Erwärmen der Kunststoffe auf Temperaturen über ihrem Erweichungspunkt, wie es bei der Verarbeitung durch Plastifizierung zwingend ist, wird nicht benötigt. Daraus ergeben sich Energieeinsparungen von 40% und darüber. Von Vorteil ist ferner die Verbesserung der physikalischen Eigenschaften der Formkörper. So konnte beispielsweise an einem Formkörper aus Polypropylen festgestellt werden, dass die Berstdruckfestigkeit von 6 bar auf 20 bar angehoben war, bei gleichzeitiger Verbesserung der Spannungs-Korrosionsbeständigkeit um den Faktor 2,8.

Nach dem erfindungsgemässen Verfahren kann der gepresste Vorformling auch schon entsprechende Konturen enthalten, die von den Bedingungen der nachfolgenden Umformung abhängen und für den herzustellenden Formkörper von Bedeutung sind, wie z.B. Siegel- oder Bördelränder bzw. Anformungen für Einfüllöffnungen und dergleichen. Ausserdem ist es möglich Vorformlinge herzustellen, die aus mindestens zwei Schichten aufgebaut sind, beispielsweise Schichten aus gleichartigen Werkstoffen mit unterschiedlicher Einfärbung oder verschiedenartigen Werkstoffen, wie Polyäthylen und Polyamid, um hieraus Formkörper zu fertigen, die besondere Dekoreigenschaften haben bzw. hinsichtlich ihrer späteren Verwendung spezifische Gebrauchseigenschaften aufweisen müssen. Hierbei werden die einzusetzenden Kunststoffe nacheinander gesintert, d.h. die einzelnen Kunststoffströme schieben sich nacheinander unter den zuerst hergestellten Vorformling und bilden dadurch den gewünschten Schichtaufbau.

Weiterbildungen der Erfindung ergeben sich aus den Unteransprüchen.

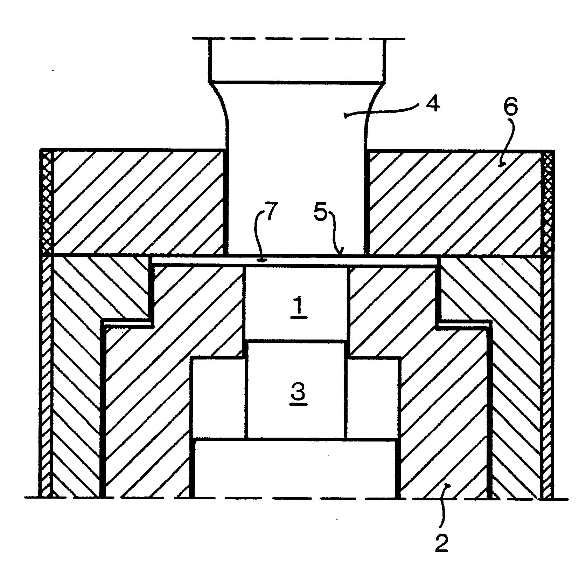

Nachstehend wird die Erfindung anhand der Zeichnung näher erläutert.

In die Aufnahmekammer 1 eines beweglichen Presstisches 2 wird der pulver- bis granulatförmige thermoplastische Kunststoff eingefüllt. Die Dosierung der Kunststoffmenge entspricht dem Volumen des herzustellenden Vorformlings; dann wird der obere Arbeitskolben 4 in hochfrequente Schwingungen versetzt, insbesondere in Schwingungen mit einer Frequenz von ca. 15 bis 21 kHz und einer Amplitude von ca. 20 bis 60 µm. An der Wirkfläche 5 des Arbeitskolbens wird die aufgewendete mechanische Energie auf den Kunststoff übertragen und in Wärme umgesetzt. Durch axiales Verschieben des Druckkolbens 3 wird sodann erreicht, dass der an der Fläche 5 des Arbeitskolbens 4 erweichte Kunststoff in die Druckkammer 7 gelangt, so dass aus der Aufnahmekammer 1 ständig neuer Kunststoff an die Wirkfläche 5 des Arbeitskolbens 4 heranführbar ist, bis das in der Aufnahmekammer 1 befindliche Kunststoffvolumen in die Druckkammer 7 gefördert ist. Die Viskosität des Kunststoffes, der von der Wirkfläche 5 des Arbeitskolbens 4 in die Druckkammer 7 abfliesst, kann durch die Arbeitsgeschwindigkeit des Druckkolbens 3 gesteuert werden, da durch sie die Verweilzeit des Kunststoffes unter der Wirkfläche 5 des Arbeitskolbens 4 einstellbar ist. Nach der Füllung der Druckkammer 7 wird durch eine Arbeitsbewegung des Presstisches 2, der zusammen mit dem in der oberen Arbeitsstellung befindlichen Druckkolbens eine geschlossene Pressfläche bildet, ein Vorformling hergestellt.

Besonders vorteilhaft ist es, wenn die obere Platte 6 und die untere Platte 2 des Presstisches temperiert sind, so dass die Temperatur des Vorformlings den Bedingungen der nachfolgenden Umformung zum Formkörper angepasst werden kann. Eine Temperierung dieser Platten kann auch im Hinblick auf die Verbesserung der Gebrauchseigenschaften der Formteile insofern von Bedeutung sein, als die in den nachfolgenden Formgebungsverfahren ablaufende biaxiale Orientierung nur dann optimal gegeben ist, wenn die Verformungstemperatur entsprechend angepasst ist. So wurde festgestellt, dass die biaxiale Verstreckung eines Vorformlings aus Polypropylen nur dann zu transparenten Formkörpern führt, wenn die Umformtemperatur zwischen 139 und 142 °C liegt. Hiervon abweichende Temperaturen führen zu Formkörpern, die unterschiedlich opak sind.

Der auf diese Weise hergestellte Vorformling wird anschliessend einer Formstation zugeführt und in der gleichen Wärme nach an sich bekannten Verfahren, wie Thermoformen, Stamping, Fliesspressen, Streckblasen und Blasformen unmittelbar zu einem Formkörper umgeformt. Aus dem Vorformling können insbesondere Hohlkörper, wie Becher, Tuben, Dosen und dergleichen gefertigt werden.

## Patentanspruch

Verfahren zur Herstellung eines Formkörpers aus pulver- bis granulatförmigem thermoplastischem Kunststoff, bei dem der Kunststoff in eine mehrteilige, einen Schwinger (4) und einen Amboss (3) aufweisende, geschlossene Form (1) eingebracht, dort mit 15 bis 21 kHz oszillierenden Schwingungen beaufschlagt und einem Druck von 10 bis 200 bar ausgesetzt wird, wobei im Kunststoff unterhalb des Kristallit-Schmelzpunktes eine Korngrenzenhaftung herbeigeführt wird, die ausreicht, um die einzelnen Kunststoffpartikel zu einem Festkörper zu verbinden, dadurch gekennzeichnet, dass der so zu einem Festkörper verbundene Kunststoff durch Druckbeaufschlagung zwischen zwei Platten (2, 6) eines Presstisches zu einem im wesentlichen ebenen Vorformling mit biaxialer Orientierung verformt und in an sich bekannter Weise unmittelbar zum Formkörper weiterverformt wird.

## Revendication

Procédé de fabrication d'un article moulé à partir d'une matière thermoplastique pulvérulente ou granulée, dans lequel la matière plastique est placée dans un moule fermé (1) à plusieurs éléments, dont une enclume (3) et un balancier (4), dans lequel elle est soumise à une pression de 10 à 200 bars avec exposition simultanée à des oscillations de 15 à 21 kHz, provoquant dans la matière plastique, en dessous du point de fusion des cristallites, une adhérence superificelle des grains suffisante pour agglomérer les particules de matière plastique en un corps solide, caractérisé en ce que la matière plastique ainsi agglomérée est formée par pression, entre deux plateaux (2, 6) d'une presse, en une ébauche sensiblement plane, orientée biaxialement, puis façonnée directement, d'une manière connue en soi en l'article moulé désiré.

## Claim

A process for the manufacture of a molding from a thermoplastic powder or granular material, in which the plastics material is introduced into a closed, multi-part mold (1) having an oscillating upper plunger (4) and a pressure piston (3), and subjected therein to vibrations at a frequency of 15 to 21 kHz and a pressure of from 10 to 200 bar, grain boundary adhesion being produced in the plastics material below the crystallite melting point, which adhesion is sufficient to bond the individual particles otgether to form a coherent body, wherein the plastics material bonded together to form a coherent body is shaped between two platens (2, 6) of a press into a essentially flat blank exhibiting biaxial orientation, which blank is reshaped directly into the molding in a conventional manner.

1/1